# EUROPEAN PATENT SPECIFICATION

(11) **EP 1 562 267 B1**
(45) Date of publication and mention of the grant of the patent: **28.11.2007**
(21) Application number: 04388007.9
(22) Date of filing: 06.02.2004
(51) Int. Cl.: H01R 25/00, H01R 13/70, G06F 1/26, H01H 47/32

(54) **A power strip device**
Eine Steckdosenleiste
Une barre d'alimentation électrique

(43) Date of publication of application: 10.08.2005
(73) Proprietor: Centritech Limited, Central, Hong Kong (CN)
(72) Inventor: Waedeled, Peter, Juan Town, Shunde City (CN)
(74) Representative: van Walstijn, Bartholomeus G. G.

(56) References cited:
- DE-U- 9 417 175
- US-A- 5 590 013
- US-A1- 2003 102 717

## Description

The present invention relates to a power strip device, i.e. an electrical device and apparatus to be use for the splitting of a single AC power outlet into a plurality of AC power outlets. More particularly, the present invention relates to an electrical power strip device to be used in combination with a computer as the computer is connected to the power strip device for receiving AC power therefrom and has a control output connected to the power strip device for switching on and off a plurality of AC power outlets to which peripheral equipment such as a printer, a bar code reader, a scanner, a loudspeaker system, a modem, a CRT or LCD display, an external hard disk drive, a CD ROM drive, a CD RW device or DVD RW device etc. are connected and consequently switched on and off by the switching on and off of the computer itself.

In the present context, a computer is to be construed as a generic term including any electrical apparatus for office use or personal use including desktop computers, portable computers, small rack computers etc. The computer may be an IBM compatible personal computer or Apple Macintosh personal computer.

There have already been made attempts to provide technical solutions for saving energy by providing switched strip power strip devices, which power strip devices are connectable to an AC power outlet and to e.g. an USB terminal of the computer. Within the power strip device, a relay such as a solenoid or solid state relay may be housed for switching the AC power outlets of the power strip device on and off controlled by the computer through its USB connection. The relay is powered directly from the USB output of the computer and the power strip includes a number, e.g. four or six AC power outlets, which are all switched on and off simultaneously controlled by the USB outlet.

The commercially available products of this type have generally been manufactured as highly expensive equipment or alternatively as extremely low cost products, which for the sake of reducing the price, have been manufactured without taking due consideration to the safety requirements when combining a low voltage control side and a high voltage AC mains supply side. The concern relating to the safety aspect is of course far more pronounced in e.g. Europe as compared to the Far East and North America, since in Europe, the AC mains supply voltage is today 230 V, whereas in the Far East and in North America, the AC mains supply voltage is merely 110-120V.

Examples of electrical power strips of this kind are described in: US 4,675,537, US 5,097,249, US 5,164,609, US 5,424,903, US 5,550,649, US 5,579,201, US 5,841,424, US 6,211,581, US 6,509,655, US 6,526,516, US 6,586,849 US 6,586,849 and DE G9417175.0.

Documetn US-A-2003102717 discloses a "power strip device, comprising:
a housing of an electrically insulating material and of an elongated configuration defining opposite end surfaces, a top surface, a bottom surface and opposite side surfaces,
an electrical cord including a live wire, a neutral wire, and a ground wire, said electrical cord extending from the end surface of said housing and having at its remote end an AC plug to be connected to an AC mains outlet for the supply of AC mains power to said power strip device,
a low USB voltage cord extending from one of said side surfaces having at its remote end a low voltage USB plug connected to a USB terminal of a computer for the supply of a low voltage control signal to said power strip device from said computer provided said computer is turned on,
a first power outlet provided at said top surface and having a first set of terminals including a first live terminal, a first neutral terminal and s first ground terminal, said first neutral terminal and said first ground terminal being connected to said neutral wire and said ground wire, respectively, of said electrical cord and said first live terminal being connected to said live wire of said electrical cord through a fuse, an additional power outlet constituting a switched power outlet and provided at said top surface and having a second set of terminals including a second live terminal, a second neutral terminal and a second ground terminal, said second neutral terminal and said second ground terminal being connected to said neutral wire and said ground wire, respectively, of said electrical cord, and
a solenoid relay including a low voltage solenoid having a pair of low voltage input terminals and an AC switch having a pair of AC output terminals, said AC output terminals being galvanically separated from said input terminals, said live terminal of said additional power outlet being connected to one of said pair of output terminals, said live wire of said electric cord being connected to the other of said pair of output terminals,
said input terminals being connected to said low voltage cord".

In particular, US patent 6,586,849 is considered to be of relevance, however, the technical description firstly includes no hints whatsoever relating to the safety precautions for separating the low voltage control side and the high voltage AC main supply side and secondly, the relays described in the reference may, according to the specification be implemented in any appropriate manner, including non-galvanically separating solid state relays.

The applicant company and in particular, the inventor has realised that the technical solutions commercially available within the technical field of switched power strip devices call for improvement and refinement, in particular in terms of safety considerations and further in terms of safe and reliable operation.

An object of the present invention is to provide a power strip device of the above described kind having a plurality of switched AC power outlets and a low voltage control input, which electric power strip device fulfils the requirements as to separation between the low voltage side and the high voltage AC mains supply side and further, provides a safe and swift switching operation as distinct from the prior art simple relay switches which in some instances may turn out to be unreliable and malfunctioning, since the low voltage and low level control connection is insufficient as to ensuring and maintaining a swift and safe switching of the relay switching on and off the AC power outlets of the prior art power strip devices.

The above object together with numerous other advantages and features, which will be evident from the below detailed description of the presently preferred embodiment of the power strip device according to the present invention is according to the teachings of the present invention obtained by a housing of an electrically insulating material and of an elongated configuration defining opposite end surfaces, a top surface, a bottom surface and opposite side surfaces,
an electrical cord including a live wire, a neutral wire, and a ground wire, said electrical cord extending from the one end surface of said housing through a first pull relief bushing and having at its remote end an AC plug to be connected to an AC mains outlet for the supply of AC mains power to said power strip device,
a low voltage cord, preferably a USB cord extending from said one end surface, from said top surface or alternatively from one of said side surfaces through a second pull relief bushing and having at its remote end a low voltage plug, preferably a USB plug to be connected to a low voltage terminal, preferably a USB terminal of a computer for the supply of a low voltage control signal to said power strip device from said computer provided said computer is turned on,
a first power outlet provided at said top surface and having a first set of terminals including a first live terminal, a first neutral terminal and a first ground terminal, said first neutral terminal and said first ground terminal being connected to said neutral wire and said ground wire, respectively, of said electrical cord and said first live terminal being connected to said live wire of said electrical cord directly or preferably through a fuse, said first power outlet having a specific signature representing a state of being permanently switched on,
at least one additional power outlet constituting a switched power outlet and provided at said top surface and having a second set of terminals including a second live terminal, a second neutral terminal and a second ground terminal, said second neutral terminal and said second ground terminal being connected to said neutral wire and said ground wire, respectively, of said electrical cord, said at least one additional power outlet having a signature representing a state of switched on and off or alternatively and preferably, having no signature, and
a solenoid relay including a low voltage solenoid having a pair of low voltage input terminals and an AC switch having a pair of AC output terminals, said AC output terminals being galvanically separated from said low voltage input terminals, said live terminal of said at least one additional power outlet being connected to said live wire of said electric cord through said pair of output terminals, and said input terminals being connected to said low voltage cord through a current amplification circuit for amplifying the current supplied from said low voltage plug when magnetising said solenoid when receiving said low voltage control signal through said low voltage cord, said amplification circuit comprising a Darlington transistor configuration connected in a series configuration with said solenoid.

It is a particular feature of the power strip device according to the present invention that the device includes a safe grounding of all AC power outlets including the permanently switched on AC power outlet and the switched AC power outlets for guaranteeing a safe connection of the AC mains powered equipment to the AC mains supply.

It is a further distinct feature of the power strip device according to the present invention that the switching from the low voltage control side to the high power AC mains supply side is established through a galvanic separation between the low voltage side and the high voltage side.

In this context, the terms low voltage and high voltage are to be construed as generic terms representing the non-hazardous low level control side such as a voltage level of below 40V, e.g. the conventional 5VDC logical control level of computer equipment and the AC mains voltage level of more than 100V such as the AC mains supply level conventionally used in Europe being 230V/50Hz and in North America 110V/60Hz and in Japan 110V/50Hz.

According to a further feature of the electrical strip device according to the present invention, the permanently switched on AC power outlet is provided with a distinct signature representing the permanently switched on state and the signature may be established by any appropriate and readily understandable manner, e.g. as a specific colouring of the first power outlet constituting the permanently switched on AC power outlet. A frame circumferentially encircling the first power outlet or a recess positioning of the first power outlet relative to the additional switched power outlets.

A particular and essential feature of the electrical power strip device according to the present invention is the current amplifying circuit connected to the switching relay for ensuring a safe and reliable switching on of the relay and consequently a switching on of the peripheral equipment connected to the switched AC power outlets and at the same time, a safe switching off of the same equipment. It has been realised that a conventional low level relay supplied from an USB output terminal or computer through a thin wire cord may not be safely energised due to the voltage drop through the electric wires when the relay is to be energised. The provision of the current amplification or magnifying circuit characteristic of the present invention ensures that the relay coil of the galvanically separating relay is safely and swiftly energised for providing a swift, safe and reliable switching on of the peripheral switched AC power outlets of the electrical power strip device according to the present invention.

The amplification circuit may, according to the presently preferred embodiment of the electrical power strip device according to the present invention be constituted by a fairly simple, yet reliable circuit configuration constituted by a Darlington transistor connected in a series configuration with the solenoid of the galvanically separating solenoid relay. The Darlington transistor configuration may be implemented by an integrated Darlington transistor being a single conventional component or by a cascade coupling of two transistors in the so-called Darlington configuration. The Darlington transistor or the two separate transistors constituting the Darlington configuration may be constituted as NPN and/or PNP transistors as is well known in the art per se.

The low voltage connection may be established in accordance with any conventional standard, such as the USB 1.1, USB 2.2, USB 2.2 high speed, fire wire or any other computer standard.

The electrically insulated housing of the power strip device according to the present invention is preferably made from a plastics material such as ABS, PP, PC, PV, PE, PVC, Nylon, a combination thereof or any other insulating plastics material and the housing is preferably made through moulding the housing in an injection moulding process.

The injection moulded housing may according to a further advantageous embodiment of the power strip device according to the present invention be composed of two parts, a bottom part to be snap-fitted or fixed by means of rivets or bolts and nuts onto a top part comprising the said one end surface, the top surface and the side surfaces and including a support for the support of a printed circuit board on which said current amplification circuit is included.

By the provision of the two part housing, the process of manufacturing the power strip device according to the present invention, in particular in terms of providing power strip devices for different national or international standards is simplified as the top housing part is simply injection moulded in accordance with the national or international standard in question and has the electrical cord and the low voltage cord mounted together with the electric printed circuit board constituting a prefabricated unit which is then sealed off by means of the bottom part. Consequently, the power strip device according to the present invention may be implemented in accordance with any international or national standards such as DE/SE/NO, UK, DK, FR, CH, IT, PT, PL, BE, NL, RU, CFA, FI,TW or UL (USA).

As indicated above, the power strip device according to the present invention is preferably implemented so as to allow all relevant peripheral equipment to be used in connection with a computer such as a PC or a Macintosh Apple computer may be switched on and off together with the computer. Consequently, the at least one additional power outlet is preferably provided in a number ranging from 2-12, such as 3-8, preferably 3-6.

As stated above, the power strip device according to the present invention is preferably implemented in accordance with any of the above national or international standards and for use in connection with 110-230V AC mains supply appliances such as 110V/60 Hz or 230V/50Hz.

The present invention is now to be further described with reference to the drawings, in which:
Fig. 1 is an overall, perspective and schematic view of a first and presently preferred embodiment of a power strip device according to the present invention implemented in accordance with a Danish standard called LMJ (Lys Med Jord), and
Fig. 2 is a diagrammatic view illustrating the electronic circuitry of the power strip device shown in Fig. 1.

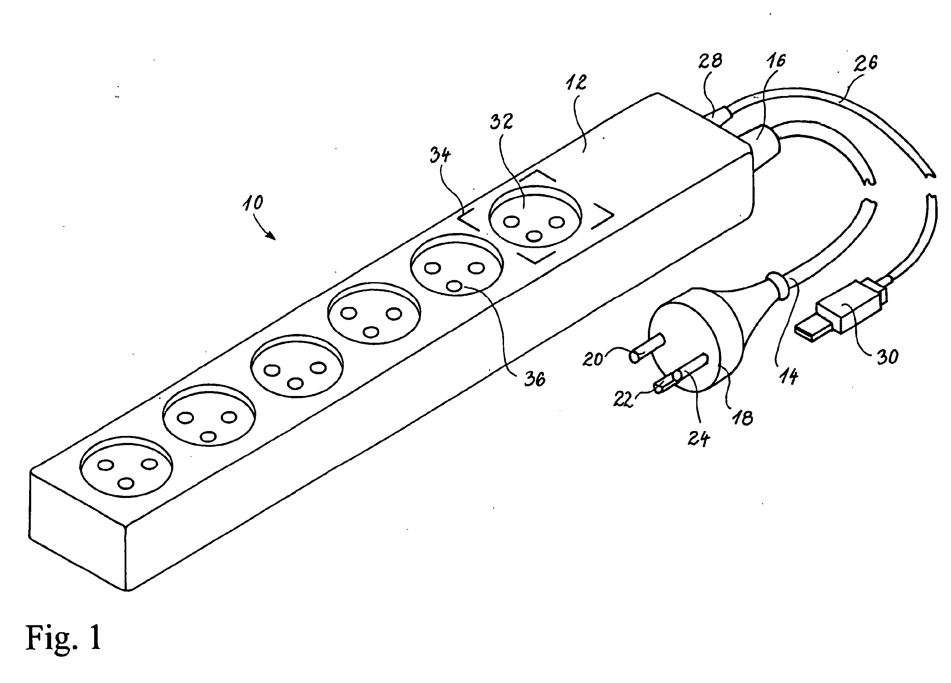

In Fig. 1, a power strip device is shown designated the reference numeral 10 in its entirety. The device is implemented in accordance with the Danish standard of equipment to be used for mains supply and mains distribution as the AC outlets of the device are implemented in accordance with the Danish standard called LMJ (Lys Med Jord). It is to be understood that the power strip device shown in Fig. 1 is only an example and the technique of providing a power strip device according to the teachings of the present invention may be implemented in accordance with any standard such as the Danish standard excluding ground terminals, the Danish EDB (Elektronisk Data Behandling) standard, the German/Swedish and Norwegian standard, also known as "Schuko", the standards of other European countries including the UK, France, Switzerland, Italy, Czechoslovakia, Poland, Portugal and also overseas standards such as the Japanese, the US or the Australian standards and the international CEE standard.

In more details, the device 10 shown in Fig. 1 comprises an elongated housing 12 defining a front end from which an AC cord 14 extends through a first pull release bushing 16 and terminating in an AC plug 18 from which three pins extend, a first pin 20 constituting a neutral pin, a second pin 22 constituting a ground pin and a third pin 24 constituting a live pin. From the same front end of the housing 12, a further cord 26 extends through a second pull release bushing 28, which cord is a low voltage control cord terminating in an USB plug 30. Whereas the cord 14 serves for the supply of 230V AC power to the power strip device 10, the cord 26 serves to supply a control signal according to any computer standards such as the USB standard, USB 1.1, USB 2.2, USB 2.2 high speed or any other relevant computer control low voltage standard.

In the housing 12, a total of six AC outlets are provided, a first one 32 positioned closest to the front end of the housing 12 from which front end the two cords 14 and 26 and being provided with a circumferential encircling signature 34 serving to identify the AC power outlet 32 from the remaining five AC power outlet, one of which is designated the reference numeral 36. The difference between the AC power outlet 32 and the AC power outlets 36 is the one that the AC power outlet is unswitched as the AC power outlet is permanently connected to the terminals 20, 22 and 24 of the plug 18 through respective wires of the cord 14 for supplying AC power to a computer which is powered from the permanently switched on AC power outlet 32, whereas the AC power outlets 36 are switched on or off depending on whether or not a control signal is supplied to the power strip device through the cord 26 or no control signal is supplied to the power strip, respectively.

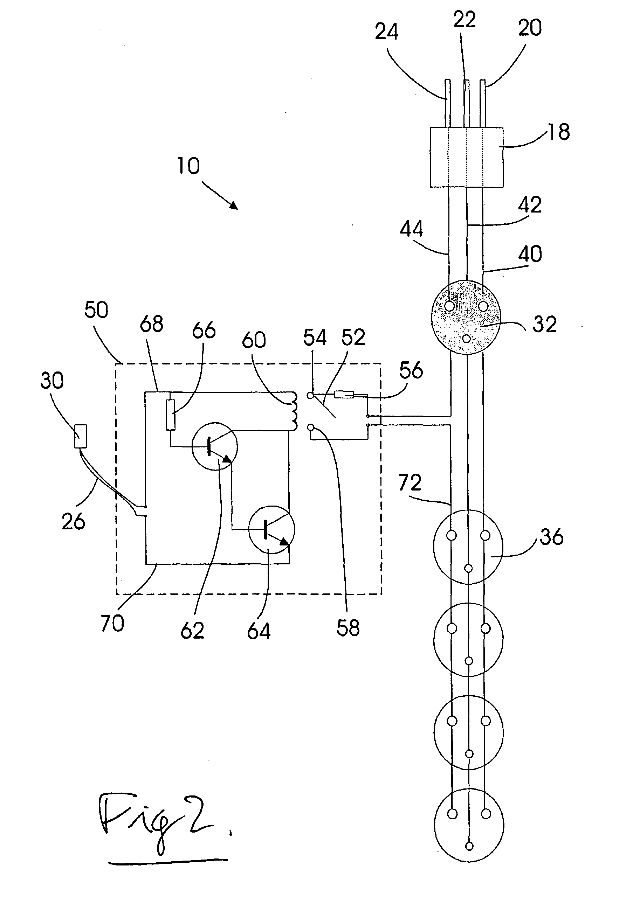

In Fig. 2, the electronic circuitry of the power strip device 10 is shown. In the upper right hand part of Fig. 2, the plug 18 is shown having its three pins 20, 22 and 24 extending upwardly. The pins 20, 22 and 24 are through the plug 18 connected to three wires 40, 42 and 44, respectively, constituting a neutral wire, a ground wire and a live wire, respectively. As is evident from Fig. 2, the three wires 40, 42 and 44 are connected directly to the permanently switched on AC power outlet 32 and the neutral wire 40 and the ground wire 42 are further connected directly to the switched AC outlets 36.

The live wire 44 is, as is evident from Fig. 2, connected to a switching on/switching off circuit 50. The circuit 50 is controlled by the presence or absence of a low voltage control signal such as a 5V USB control signal supplied from the low voltage USB plug 30 through the low voltage cord 26. The circuitry 50 includes centrally a galvanically separating relay including a one pole switch 52, which is activated by means of a solenoid coil 60. A first terminal 54 of the one pole switch 52 is connected to the live wire 44 of the permanently switched on AC power outlet 32 and consequently, the live terminal 24 of the AC plug 18, optionally through a fuse 56, provided the relevant standard in question prescribes the use of a fuse. A second terminal 58 of the one pole switch 52 is connected to a switched on/switched off live wire 58, which is connected to the switched AC power outlets 36.

The low voltage side of the electronic circuitry 50, i.e. the control side of the solenoid relay includes a current amplification circuit serving to provide a swift, reliable and precise switching on and off of the relay by amplifying the energising current supplied through the solenoid coil 60. The current amplifying circuit comprises in the embodiment shown in Fig. 2, a pair of NPN transistors 62 and 64, e.g. of the type S8050 connected in a Darlington configuration, i.e. a high current gain amplifying transistor configuration, as the base of the first transistor 62 is connected through a resistor 66, e.g. a 47kΩ resistor to a first wire 68 of the low voltage cord 26, which also is connected to the one end of the solenoid coil 60. The other end of the solenoid coil 60 is jointly connected to the collectors of the two NPN transistors 62 and 64 and the emitter of the transistor 62 is connected to the base of the transistor 64 for establishing the Darlington configuration, whereas the emitter of the second transistor 64 is connected to a second wire 70 of the cord 26. As will be understood, differently configurated current amplification circuits may be provided, e.g. as a mirror image of the dual NPN transistor configuration, i.e. as a PNP configuration or a combined NPN/PNP or PNP/NPN transistor configuration. Further alternatively, an integral NPN or PNP Darlington transistor may be used.

Although the present invention has been described above with reference to a specific and presently preferred embodiment of the power strip device according to the present invention, numerous modifications, as already mentioned above, will be obvious to a person having ordinary skill in the art, as the power strip device may be modified for complying with a specific national or international AC mains supply standard and further the number of switched AC power outlets may be varied from e.g. three to a number exceeding the number shown in Fig. 1. All such modifications are to be considered part of the present invention as defined in the appending claims.

## Claims

1. A power strip device (10), comprising:
a housing (12) of an electrically insulating material and of an elongated configuration defining opposite end surfaces, a top surface, a bottom surface and opposite side surfaces,
an electrical cord (14) including a live wire (44), a neutral wire (40), and a ground wire (42), said electrical cord extending from the one end surface of said housing through a first pull relief bushing (16) and having at its remote end an AC plug (18) to be connected to an AC mains outlet for the supply of AC mains power to said power strip device,
a low voltage cord (26), preferably a USB cord extending from said one end surface, from said top surface or alternatively from one of said side surfaces through a second pull relief bushing (28) and having at its remote end a low voltage plug (30), preferably a USB plug to be connected to a low voltage terminal, preferably a USB terminal of a computer for the supply of a low voltage control signal to said power strip device from said computer provided said computer is turned on,
a first power outlet (32) provided at said top surface and having a first set of terminals including a first live terminal, a first neutral terminal and a first ground terminal, said first neutral terminal and said first ground terminal being connected to said neutral wire and said ground wire, respectively, of said electrical cord and said first live terminal being connected to said live wire of said electrical cord directly or preferably through a fuse, said first power outlet having a specific signature (34) representing a state of being permanently switched on,
at least one additional power outlet (36) constituting a switched power outlet and provided at said top surface and having a second set of terminals including a second live terminal, a second neutral terminal and a second ground terminal, said second neutral terminal and said second ground terminal being connected to said neutral wire and said ground wire, respectively, of said electrical cord, said at least one additional power outlet having a signature representing a state of switched on and off or alternatively or preferably, having no signature, and
a solenoid relay including a low voltage solenoid (60) having a pair of low voltage input terminals and an AC switch (52) having a pair of AC output terminals, said AC output terminals being galvanically separated from said low voltage input terminals, said live terminal of said at least one additional power outlet being connected to said live wire of said electric cord through said pair of output terminals, and said input terminals being connected to said low voltage cord (26) through a current amplification circuit (62, 64, 66) for amplifying the current supplied from said low voltage plug when magnetising said solenoid when receiving said low voltage control signal through said low voltage cord, said amplification circuit comprising a Darlington transistor configuration (62, 64) connected in a series configuration with said solenoid (60).

2. The power strip device according to claim 1, said Darlington transistor configuration comprising a single Darlington transistor.

3. The power strip device according to claim 1, said Darlington transistor configuration comprising two separate transistors of type NPN and/or PNP (62, 64).

4. The power strip device according to any of the claims 1-3, said specific signature (34) representing a state of being permanently switched on, being established by a specific colour, a recess circumferentially encircling said first power outlet, a frame circumferentially encircling said first power outlet or a recessed positioned of said first power outlet relative to said top surface.

5. The power strip device according to any of the claims 1-4, said low voltage plug (30) being implemented in accordance with USB 1.1, USB 2.2., USB 2.2 high speed, fire wire or any other computer standard.

6. The power strip according to any of the claims 1-5, said housing being made from plastics material such as ABS, PP, PC, PE, PVC, Nylon, combinations thereof or any other insulating plastics material and being made through moulding said housing in an injection moulding process.

7. The power strip device according to 1-6, said housing (12) being composed of two parts, a bottom part to be snap-fitted or fixed by means of rivets or bolts and nuts onto a top part comprising the said one end surface, the top surface and the side surfaces and including a support for the support of a printed circuit board on which said current amplification circuit is included.

8. The power strip device according to any of the claims 1-7, said AC plug (18), said first power outlet and said at least one additional power outlet being made according to any of the following national or international standards of DE/SE/NO, UK, DK, FR, CH, IT, PT, PL, BE, NL, RU, CFA, FI, TW or UL (USA).

9. The power strip device according to any of the claims 1-8, said at least one additional power outlet (36) being provided in a number ranging from 2-12, such as 3-8, preferably 3-6.

10. The power strip device according to any of the claims 1-9, said low voltage control signal being a DC signal of a voltage lower than 40V, such as a conventional 5V logical control signal.

11. The power strip device according to any of the claims 1-10, said AC being 110-230V, such as 110V/60Hz or 230/50Hz.

## Patentansprüche

1. Steckerleiste (10), die Folgendes umfasst:
ein Gehäuse (12) aus einem elektrisch isolierenden Material und von einer länglichen Konfiguration mit gegenüberliegenden Endflächen, einer Oberseite, einer Unterseite und gegenüberliegenden Seitenflächen,
ein Stromkabel (14) mit einem stromführenden Leiter (44), einem Nullleiter (40) und einem Erdleiter (42), wobei das Stromkabel sich von der einen Endfläche des Gehäuses durch eine Zugentlastungsdurchführung (16) hindurch erstreckt und an seinem entfernten Ende einen Wechselstromstecker (18) aufweist, der an eine Wechselstrom-Netzsteckdose anzuschließen ist, um Netz-Wechselstrom zu der Steckerleiste zu leiten,
ein Niederspannungskabel (26), vorzugsweise ein USB-Kabel, das sich von der einen Endfläche, von der Oberseite oder alternativ von einer der Seitenflächen durch eine zweite Zugentlastungsdurchführung (28) hindurch erstreckt und an seinem entfernten Ende einen Niederspannungsstecker (30), vorzugsweise einen USB-Stecker, aufweist, der an einen Niederspannungsanschluss, vorzugsweise einen USB-Anschluss eines Computers, anzuschließen ist, um ein Niederspannungssteuersignal von dem Computer zu der Steckerleiste zu leiten, sofern der Computer eingeschaltet ist,
eine erste Steckdose (32), die auf der Oberseite angeordnet ist und eine erste Gruppe von Anschlüssen aufweist, einschließlich eines ersten stromführenden Anschlusses, eines ersten Sternpunktanschlusses und eines ersten Erdungsanschlusses, wobei der erste Sternpunktanschluss und der erste Erdungsanschluss mit dem Nullleiter bzw. dem Erdleiter des Stromkabels verbunden sind und der erste stromführende Anschluss mit dem stromführenden Leiter des Stromkabels direkt oder bevorzugt über eine Sicherung verbunden ist, wobei die erste Steckdose eine spezielle Kennzeichnung (34) aufweist, die einen Dauereinschaltzustand darstellt,
mindestens eine weitere Steckdose (36), die eine geschaltete Steckdose darstellt und auf der Oberseite angeordnet ist und eine zweite Gruppe von Anschlüssen aufweist, einschließlich eines zweiten stromführenden Anschlusses, eines zweiten Sternpunktanschlusses und eines zweiten Erdungsanschlusses, wobei der zweite Sternpunktanschluss und der zweite Erdungsanschluss mit dem Nullleiter bzw. dem Erdleiter des Stromkabels verbunden sind, wobei die mindestens eine weitere Steckdose eine Kennzeichnung aufweist, die einen Ein- und Ausschaltzustand darstellt, oder alternativ oder bevorzugt keine Kennzeichnung aufweist, und
ein Solenoidrelais mit einem Niederspannungssolenoid (60), das ein Paar Niederspannungseingangsanschlüsse aufweist, und einem Wechselstromschalter (52), der ein Paar Wechselstromausgangsanschlüsse aufweist, wobei die Wechselstromausgangsanschlüsse galvanisch von den Niederspannungseingangsanschlüssen getrennt sind, wobei der stromführende Anschluss der mindestens einen weiteren Steckdose über das Paar Ausgangsanschlüsse mit dem stromführenden Leiter des Stromkabels verbunden ist und die Eingangsanschlüsse mit dem Niederspannungskabel (26) über eine Stromverstärkerschaltung (62, 64, 66) verbunden sind, die dazu dient, den Strom zu verstärken, der von dem Niederspannungsstecker zugeführt wird, wenn das Solenoid magnetisiert wird, wenn das Niederspannungssteuersignal über das Niederspannungskabel empfangen wird, wobei die Verstärkerschaltung eine Darlington-Transistor-Konfiguration (62, 64) umfasst, die mit dem Solenoid (60) in einer Reihenkonfiguration verbunden ist.

2. Steckerleiste nach Anspruch 1, wobei die Darlington-Transistor-Konfiguration einen einzelnen Darlington-Transistor umfasst.

3. Steckerleiste nach Anspruch 1, wobei die Darlington-Transistor-Konfiguration zwei separate Transistoren des Typs NPN und/oder PNP (62, 64) umfasst.

4. Steckerleiste nach einem der Ansprüche 1-3, wobei die spezielle Kennzeichnung (34), die einen Dauereinschaltzustand darstellt, durch eine bestimmte Farbe, durch eine Aussparung, die um die erste Steckdose herum verläuft, durch einen Rahmen, der um die erste Steckdose herum verläuft, oder durch eine abgesenkte Positionierung der ersten Steckdose relativ zur Oberseite hergestellt wird.

5. Steckerleiste nach einem der Ansprüche 1-4, wobei der Niederspannungsstecker (30) gemäß USB 1.1, USB 2.2, USB 2.2 High-Speed, Fire-Wire oder einem sonstigen Computer-Standard implementiert ist.

6. Steckerleiste nach einem der Ansprüche 1-5, wobei das Gehäuse aus einem Kunststoffmaterial wie zum Beispiel ABS, PP, PC, PE, PVC, Nylon, Kombinationen daraus oder aus einem sonstigen isolierenden Kunststoffmaterial hergestellt ist und durch Formen des Gehäuses mittels Spritzgießen hergestellt wird.

7. Steckerleiste nach einem der Ansprüche 1-6, wobei das Gehäuse (12) aus zwei Teilen zusammengesetzt ist, wobei ein unterer Teil auf einen oberen Teil aufgeschnappt oder mittels Nieten oder Schrauben und Muttern auf einem oberen Teil befestigt wird, der die eine Endfläche, die Oberseite und die Seitenflächen umfasst und einen Träger zum Aufnehmen einer gedruckten Leiterplatte enthält, auf der die Stromverstärkerschaltung enthalten ist.

8. Steckerleiste nach einem der Ansprüche 1-7, wobei der Wechselstromstecker (18), die erste Steckdose und die mindestens eine weitere Steckdose gemäß einem der folgenden nationalen oder internationalen Standards von DE/SE/NO, UK, DK, FR, CH, IT, PT, PL, BE, NL, RU, CFA, FI, TW oder UL (USA) hergestellt sind.

9. Steckerleiste nach einem der Ansprüche 1-8, wobei die mindestens eine weitere Steckdose (36) in einer Anzahl im Bereich von 2-12, wie zum Beispiel 3-8, bevorzugt 3-6, bereitgestellt ist.

10. Steckerleiste nach einem der Ansprüche 1-9, wobei das Niederspannungssteuersignal ein Gleichstromsignal mit einer Spannung von weniger als 40 V ist, wie zum Beispiel ein herkömmliches logisches 5 V-Steuersignal.

11. Steckerleiste nach einem der Ansprüche 1-10, wobei der Wechselstrom eine Spannung von 110-230 V aufweist, wie zum Beispiel 110 V / 60 Hz oder 230 V / 50 Hz.

## Revendications

1. Dispositif de bande de courant (10), comprenant
un boîtier (12) en matériau électriquement isolant et d'une configuration allongée délimitant des surfaces terminales opposées, une surface de dessus, une surface de fond et des surfaces latérales opposées,
un cordon électrique (14) comprenant un câble sous tension (44), un câble neutre (40) et un câble de terre (42), ledit cordon électrique s'étendant depuis une surface terminale dudit boîtier dans un premier manchon de décharge (16) et comportant à son extrémité distante une fiche à courant alternatif (18) à connecter à une sortie de réseau de courant alternatif pour la fourniture de courant de réseau de courant alternatif audit dispositif de bande de courant,
un cordon à basse tension (26), de préférence un cordon USB s'étendant depuis ladite surface de dessus ou alternativement depuis une desdites surfaces latérales dans un deuxième manchon de décharge (28) et comportant à son extrémité distante une fiche à basse tension (30), de préférence une fiche USB à connecter à une borne à basse tension, de préférence une borne USB d'un ordinateur pour la fourniture d'un signal de contrôle de basse tension audit dispositif de bande de courant depuis ledit ordinateur pourvu que ledit ordinateur soit activé,
une première sortie de courant (32) prévue sur ladite surface de dessus et comportant un premier ensemble de bornes comprenant une première borne sous tension, une première borne neutre et une première borne de terre, ladite première borne neutre et ladite première borne de terre étant connectées respectivement audit câble neutre et audit câble de terre dudit cordon électrique et ladite première borne sous tension étant connectée audit câble sous tension dudit cordon électrique directement ou de préférence par un fusible, ladite première sortie de courant ayant une signature spécifique (34) représentant un état d'activation permanente,
au moins une sortie de courant supplémentaire (36) constituant une sortie de courant commutée et prévue sur ladite surface de dessus et comportant un deuxième ensemble de bornes incluant une deuxième borne sous tension, une deuxième borne neutre et une deuxième borne de terre, ladite deuxième borne neutre et ladite deuxième borne de terre étant connectées audit câble neutre et audit câble de terre respectifs dudit cordon électrique, ladite au moins une sortie de courant supplémentaire ayant une signature représentant un état d'activation ou de désactivation ou n'ayant alternativement ou de préférence pas de signature, et
un relais à solénoïde comprenant un solénoïde à basse tension (60) comportant une paire de bornes d'entrée à basse tension et un interrupteur de courant alternatif (52) comportant une paire de bornes de sortie de courant alternatif, lesdites bornes de sortie de courant alternatif étant séparées par galvanisation desdites bornes d'entrée de basse tension, ladite borne sous tension de ladite au moins une sortie de courant supplémentaire étant connectée audit câble sous tension dudit cordon électrique par ladite paire de bornes de sortie et lesdites bornes d'entrée étant connectées audit cordon à basse tension (26) par un circuit d'amplification de courant (62, 64, 66) pour amplifier le courant fourni par ladite fiche à basse tension lors de la magnétisation dudit solénoïde à la réception dudit signal de contrôle de basse tension par ledit cordon à basse tension, ledit circuit d'amplification comprenant une structure à transistor Darlington (62, 64) connectée en configuration en série audit solénoïde (60).

2. Dispositif de bande de courant selon la revendication 1, dans lequel ladite structure à transistor Darlington comprend un seul transistor Darlington.

3. Dispositif de bande de courant selon la revendication 1, dans lequel ladite structure à transistor Darlington comprend deux transistors séparés de type NPN et/ou PNP (62, 64).

4. Dispositif de bande de courant selon l'une quelconque des revendications 1 à 3, dans lequel ladite signature spécifique (34) présentant un état d'activation permanente est établie par une couleur spécifique, un retrait encerclant sur sa circonférence ladite première sortie de courant, un cadre encerclant sur sa circonférence ladite première sortie de courant ou un retrait positionné de ladite première sortie de courant par rapport à ladite surface de dessus.

5. Dispositif de bande de courant selon l'une quelconque des revendications 1 à 4, dans lequel ladite fiche à basse tension (30) est mise en oeuvre en conformité avec la norme de grande vitesse, câble de détection d'incendie USB 1.1, USB 2.2, USB 2.2 ou toute autre norme informatique.

6. Dispositif de bande de courant selon l'une quelconque des revendications 1 à 5, dans lequel ledit boîtier est en matière plastique comme de l'ABS, du PP, PC, PVC, nylon, leurs combinaisons ou toute autre matière plastique isolante et est fabriqué en moulant ledit boîtier dans un processus de moulage par injection.

7. Dispositif de bande de courant selon l'une quelconque des revendications 1 à 6, dans lequel ledit boîtier (12) est composé de deux pièces, une pièce de fond étant destiné à être ajustée par enclenchement ou fixée à l'aide de rivets ou de boulons et d'écrous sur une pièce de dessus comprenant ladite une surface terminale, la surface de dessus et les surfaces latérales et comprenant un support pour supporter un circuit imprimé sur lequel ledit circuit d'amplification de courant est intégré.

8. Dispositif de bande de courant selon l'une quelconque des revendications 1 à 7, dans lequel ladite fiche à courant alternatif (18), ladite première sortie de courant et ladite au moins une sortie de courant supplémentaire sont réalisées en conformité avec l'une quelconque des normes nationales ou internationales suivantes de DE/SE/NO, UK, DK, CH, IT, PT, PL, BE, NL, RU, CFA, FI, TW ou UL (USA).

9. Dispositif de bande de courant selon l'une quelconque des revendications 1 à 7, dans lequel ladite au moins une sortie de courant supplémentaire est prévue en un nombre allant de 2 à 12, comme 3 à 8, de préférence 3 à 6.

10. Dispositif de bande de courant selon l'une quelconque des revendications 1 à 9, dans lequel ledit signal de contrôle de basse tension est un signal de courant continu d'une tension inférieure à 40 V, comme un signal de contrôle logique conventionnel de 5 V.

11. Dispositif de bande de courant selon l'une quelconque des revendications 1 à 10, dans lequel ledit courant alternatif est de 110 à 230 V, comme 110 V/60 Hz ou 230/50 HZ.
